# EUROPEAN PATENT SPECIFICATION

(11) **EP 3 972 329 B1**
(45) Date of publication and mention of the grant of the patent: **18.09.2024**
(21) Application number: 20806478.2
(22) Date of filing: 08.05.2020
(51) Int. Cl.: H04W 52/02, H04W 24/10, H04W 76/16

(54) **NETWORK CONNECTION METHOD, ELECTRONIC DEVICE, AND STORAGE MEDIUM**
NETZWERKVERBINDUNGSVERFAHREN, ELEKTRONISCHE VORRICHTUNG UND SPEICHERMEDIUM
PROCÉDÉ DE CONNEXION À UN RÉSEAU, DISPOSITIF ÉLECTRONIQUE ET SUPPORT DE STOCKAGE

(30) Priority: 16.05.2019 CN 201910405971; 16.09.2019 CN 201910870158
(43) Date of publication of application: 23.03.2022
(73) Proprietor: GUANGDONG OPPO MOBILE TELECOMMUNICATIONS CORP., LTD., Dongguan, Guangdong 523860 (CN)
(72) Inventor: WANG, Zhi, Dongguan, Guangdong 523860 (CN); YANG, Xingsui, Dongguan, Guangdong 523860 (CN); TANG, Kai, Dongguan, Guangdong 523860 (CN); XIA, Yang, Dongguan, Guangdong 523860 (CN)
(74) Representative: Taor, Simon Edward William
(86) International application number: PCT/CN2020/089226
(87) International publication number: WO 2020/228611

(56) References cited:
- EP-A1- 3 048 748
- WO-A1-2018/060548
- WO-A1-2020/251815
- WO-A1-2021/052244
- CN-A- 106 160 963
- CN-A- 108 353 380
- CN-A- 108 632 880
- CN-A- 109 429 267
- US-A1- 2016 242 226
- US-A1- 2018 220 294
- NTT DOCOMO: "Interworking between NGC and EPC", S2-170934, 7 February 2017 (2017-02-07), XP051228211, DOI: 20200721120819A

## Description

### CROSS-REFERENCE TO RELATED APPLICATION

This application claims the priority of the Chinese patent applications with an application number 201910870158.7, filed on September 16, 2019 (also referring to CN110557779A), and an application number 201910405971.7, filed on May 16, 2019.

### BACKGROUND OF DISCLOSURE

### 1. Field of the Disclosure

The present disclosure relates to the field of wireless communication technology, and specifically to a network connection method.

### 2. Description of the Related Art

The New Radio (NR) system supports the standalone (SA) architecture and the non-standalone (NSA) architecture. A typical NSA architecture is a dual connection (DC) architecture.

In the dual connection architecture, a terminal device can work in a dual connection mode. For example, US2016/0242226A1 discloses a base station device in a radio communication system in which a communication device is capable of connecting to the base station device and a first other base station device simultaneously; US2018/0220294A1 discloses a method that includes determining a cell supporting a second UE category lower than a first UE category, and while in an idle mode: operating in the cell according to the first UE category, and taking action to operate in the cell according to the second UE category based on the determination; EP3048748A1 discloses that an MBS receives from a mobile terminal a RLF message indicative of a RLF occurring at the mobile terminal for an SBS and transmits to the mobile terminal a first deactivation instruction message for instructing the mobile terminal to be deactivated for the SBS. In the dual connection mode, the terminal establishes a connection with two network devices in the NSA architecture. For example, the terminal device establishes connections with a network device in a long term evolution (LTE) system and a network device in the NR system. At this time, there is a problem that the terminal device consumes a lot of power and has short battery life.

### SUMMARY

The embodiments of the present disclosure provide a network connection method.

The technical solutions of the embodiments of the present disclosure are implemented as follows:

In a first aspect, an embodiment of the present disclosure provides a network connection method, wherein a terminal device supports a dual connection mode and establishes a connection with a network device through a first network, the method includes: sending, by the terminal device, a cell re-registration request message to the network device in a case that a request for updating a tracking area from the terminal device to the network device fails; wherein the cell re-registration request message is used to cause the network device to know a capability of the terminal device to connect to a second network;
receiving, by the terminal device, a network connection mode configured by the network device.

In the above solution, the case that the request for updating the tracking area from the terminal device to the network device fails, includes: sending, by the terminal device, a tracking area update request message to the network device, in an idle state; wherein the terminal device does not receive a terminal device capability enquiry request message sent by the network device, within a predetermined duration.

In the above solution, the cell re-registration request message includes: the terminal device supporting connecting to the second network, or the terminal device not supporting connecting to the second network.

In the above solution, in a case that the cell re-registration request message includes the terminal device not supporting connecting to the second network, the receiving, by the terminal device, the network connection mode configured by the network device, including:
receiving, by the terminal device, a single connection mode configured by the network device; wherein the terminal device is only capable of accessing the first network, in the single connection mode.

In the above solution, in a case that the cell re-registration request message includes the terminal device supporting connecting to the second network, the receiving, by the terminal device, the network connection mode configured by the network device, including:
Receiving, by the terminal device, the dual second network connection mode configured by the network device; wherein the terminal device is capable of accessing the first network and the second network simultaneously, in the dual connection mode.

In the above solution, the method further includes: sending, by the terminal device, first information to the network device, wherein the first information is used to indicate that the terminal device supports connecting to the second network.

In the above solution, the first network is an LTE network, and the second network is an NR network.

In a second aspect, an example useful for understanding the invention which is not part of the present disclosure provides a network connection method, which includes:
Receiving, by a network device, a tracking area update request message sent by a terminal device, wherein the network device establishes a connection with the terminal device through a first network; ignoring, by the network device, the tracking area update request message.

In the above solution, the ignoring, by the network device, the tracking area update request, includes: not sending, by the network device, a terminal device capability enquiry request message to the terminal device, within a predetermined duration after the tracking area update request message is received by the network device.

In the above solution, the method further includes: receiving, by the network device, a cell re-registration request message sent by the terminal device, wherein the cell re-registration request message is used to cause the network device to know a capability of the terminal device to connect to a second network.

In the above solution, the method further includes: configuring a network connection mode for the terminal device based on the cell re-registration request message by the network device.

In the above solution, the configuring the network connection mode for the terminal device based on the cell re-registration request message by the network device includes:
Configuring a single connection mode for the terminal device by the network device in a case that the cell re-registration request message includes the terminal device not supporting a connection to the second network; wherein the terminal device is only capable of accessing the first network, in the single connection mode.

In the above solution, the configuring the network connection mode for the terminal device based on the cell re-registration request message by the network device includes:
Configuring the dual connection mode for the terminal device by the network device in a case that the cell re-registration request message includes the terminal device supporting a connection to the second network; wherein the terminal device is capable of accessing the first network and the second network simultaneously, in the dual connection mode.

In the above solution, the method further includes: receiving, by the network device, first information sent by the terminal device, wherein the first information is used to indicate that the terminal device supports the connection to the second network.

In the above solution, the first network is an LTE network, and the second network is an NR network.

In a third aspect, an example useful for understanding the invention which is not part of the present disclosure also provides a terminal device, which includes:
A first sending unit configured to send a cell re-registration request message to a network device in a case that a request for updating a tracking area from a terminal device to a network device fails; wherein the terminal device supports a dual connection mode and establishes a connection with the network device through a first network, and the cell re-registration request message is configured to cause the network device to know a capability of the terminal device to connect to a second network;
A first receiving unit configured to receive a network connection mode configured by the network device.
In the above solution, the first sending unit is configured to send a tracking area update request message to the network device when the terminal device is in an idle state;
The first receiving unit does not receive a terminal device capability enquiry request message sent by the network device, within a predetermined duration.

In the above solution, the cell re-registration request message includes: the terminal device supporting connecting to the second network, or the terminal device not supporting connecting to the second network.

In the above solution, the first receiving unit is configured to receive a single connection mode configured by the network device in a case that the cell re-registration request message includes the terminal device not supporting connecting to the second network; wherein the terminal device is only capable of accessing the first network, in the single connection mode.

In the above solution, the first receiving unit is configured to receive the dual connection mode configured by the network device in a case that the cell re-registration request message includes the terminal device supporting connecting to the second network;
The terminal device is capable of accessing the first network and the second network simultaneously, in the dual connection mode.

In the above solution, the first sending unit is further configured to send first information to the network device, wherein the first information is used to indicate the terminal device supporting connecting to the second network.

In the above solution, the first network is an LTE network, and the second network is an NR network.

In a fourth aspect, an example useful for understanding the invention which is not part of the present application also provides a network device, which includes:
A second receiving unit configured to receive a tracking area update request message sent by a terminal device, wherein the network device establishes a connection with the terminal device through a first network;
A processing unit configured to ignore the tracking area update request message.

In the above solution, the processing unit is configured to not send a terminal device capability enquiry request message to the terminal device within a predetermined duration after the tracking area update request message is received by the second receiving unit.

In the above solution, the second receiving unit is further configured to receive a cell re-registration request message sent by the terminal device, wherein the cell re-registration request message is used to cause the network device to know a capability of the terminal device to connect to a second network.

In the above solution, the processing unit is further configured to configure a network connection mode for the terminal device based on the cell re-registration request message.

In the above solution, the processing unit is configured to configure a single connection mode for the terminal device in a case that the cell re-registration request message includes the terminal device not supporting connecting to the second network; wherein the terminal device is only capable of accessing the first network, in the single connection mode.

In the above solution, the processing unit is configured to configure the dual connection mode for the terminal device in a case that the cell re-registration request message includes the terminal device supporting connecting to the second network; wherein the terminal device is capable of accessing the first network and the second network simultaneously, in the dual connection mode.

In the above solution, the second receiving unit is further configured to receive first information sent by the terminal device, wherein the first information is configured to indicate that the terminal device supports connecting to the second network.

In the above solution, the first network is an LTE network, and the second network is an NR network.

A further example useful for understanding the invention which is not part of the present disclosure also provides a storage medium storing an executable program, when executed by a processor, to implement the network connection method executed by the terminal device mentioned above.

Another example useful for understanding the invention which is not part of the present disclosure also provides a storage medium storing an executable program, when executed by a processor, to implement the network connection method executed by the terminal device mentioned above.

In the network connection method, provided by the embodiments of the present disclosure, in a case that a request for updating a tracking area from a terminal device to a network device fails, the terminal device sends the cell re-registration request message to the network device; the cell re-registration request message is used to cause the network device to know a capability of the terminal device to connect to the second network; the terminal device receives the network connection mode configured by the network device, and the terminal device and the network device establish the connection through a first network. In this way, the terminal device can inform the network device the ability of the terminal device to connect to the second network by the cell re-registration request message, so that the network device can configure the network connection mode for the terminal device according to the ability of the terminal device to connect to the second network; in turn, the power consumption of the terminal device is saved, and the endurance time of the terminal device is prolonged.

### BRIEF DESCRIPTION OF DRAWINGS

FIG. 1 is a schematic diagram of a software/hardware structure of an electronic device in an embodiment of the present disclosure;
FIG. 2 is a schematic diagram of an architecture of a network connection method provided by an embodiment of the present disclosure;
FIG. 3 is a schematic diagram of a process of a network connection method, applied to a terminal device, provided by an embodiment of the present disclosure;
FIG. 4 is a schematic diagram of a structure of a communication module of a terminal device in a dual connection mode used in an embodiment of the present disclosure;
FIG. 5 is a schematic diagram of a tracking area update process used in an embodiment of the present disclosure;
FIG. 6 is a schematic diagram of a composition structure of a terminal device used in an embodiment of the present disclosure;
FIG. 7 is a schematic diagram of a composition structure of a network device used in an embodiment of the present disclosure;

### DETAILED DESCRIPTION OF EMBODIMENTS

The present disclosure will be further described in detail below in conjunction with the drawings and embodiments. It should be understood that the specific embodiments described here are only used to explain the present disclosure, and are not used to limit the present disclosure.

The embodiments of the present disclosure provide a network connection method and an electronic device, which is not covered by the claims but is reasonably considered to be useful for highlighting specific aspect of the amended claims, such as the network connection method. The electronic device serves as an entity implementing the network connection method, it can be implemented by using various ways in practical applications. For example, the electronic device may be a smartphone, a tablet computer, a laptop computer, or a wearable device (such as a smart glasses, a smart watch, etc.). An operating system of the electronic device can be developed by a third-party and can run on a microcomputer structure (including at least a processor and a memory). In the drawings in the embodiments of the present disclosure, the electronic device is illustrated as a smartphone, which does not constitute a limitation on a type of the electronic device to which the technical solutions described in the embodiments of the present disclosure are applicable.

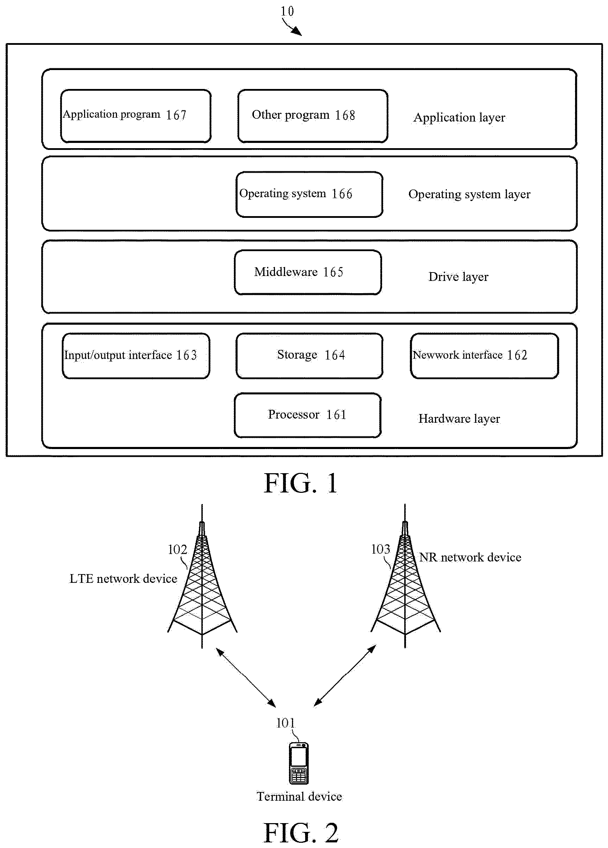

The software/hardware structure of the electronic device 10, see FIG. 1, includes a hardware layer, a driver layer, an operating system layer, and an application layer. However, those skilled in the art should understand that the electronic device 10 used for information processing may be equipped with more components than in FIG. 1 according to implementation requirements, or some components may be omitted according to implementation requirements.

The hardware layer of the electronic device 10 includes a processor 161, an input/output interface 163, a memory 164, and a network interface 162. The components can be connected and communicated via a system bus.

The processor 161 may be implemented by using a central processing unit (CPU), a microprocessor (MCU), an application specific integrated circuit (ASIC), or a logic programmable gate array (FPGA).

The input/output interface 163 can be implemented by using input/output devices such as a display screen, a touch screen, and a speaker.

The memory 164 can be implemented by using non-volatile storage media such as flash memory, hard disks, and optical disks, or can be implemented by using volatile storage media such as double data rate (DDR) dynamic caches, in which executable instructions are stored to execute the above-mentioned network connection method.

The network interface 162 provides the processor 161 with the capability to access external data, such as in the memory 164 located at a remote location, based on a network transmission protocol such as transfer control protocol (TCP)/user datagram protocol (UDP).

The driver layer includes middleware 165 for the operating system 166 to recognize the hardware layer and communicate with components of the hardware layer. For example, the middleware 165 may be a collection of drivers for each component of the hardware layer.

The operating system 166 is used to provide a user-oriented graphical interface, and the operating system 166 supports the user to control a pointed device via the graphical interface. The embodiment of the present disclosure does not limit the software environment of the above-mentioned device, such as a type and a version of the operating system.

The application layer includes an application program 167 for implementing the network connection method provided in the embodiment of the present disclosure. Certainly, it may also include other programs 168.

The architecture of the network connection method provided by an embodiment of the present disclosure is briefly described as follows. In the dual-connection architecture as shown in FIG. 2. A terminal device 101 can establish an air interface connection with a primary network device 102 (also referred to as a primary node) to realize communication with the primary network device 102. The terminal device 101 can also establish an air interface connection with a secondary network device 103 (also referred to as a secondary node) to realize communication with a secondary network device 103. The terminal device 101 can also simultaneously establish air interface connections with the primary network device 102 and the secondary network device 103, so as to simultaneously realize the communication with the primary network device 102 and the secondary network device 103, so as to simultaneously realize communication with the primary network device 102 and the secondary network device 103.

In the dual connection mode, the terminal device 101 simultaneously establishes two connections with the primary network device 102 and the secondary network device 103, wherein the primary network device 102 is mainly responsible for transmitting signalling, and the secondary network device 103 is responsible for transmitting data. The technical solutions of the embodiments of the present disclosure are mainly aimed at a terminal in the dual connection mode.

The types of the primary network device 102 and the secondary network device 103, shown in FIG. 2, may be the same or different. In an example, the primary network device 102 is an LTE network device, and the secondary network device 103 is an NR network device. In another example, the primary network device 102 is an NR network device, and the secondary network device 103 is also an NR network device. In another example, the primary network device 102 is an NR network device, and the secondary network device 103 is an LTE network device. In the embodiment of the present disclosure, the types of the primary network device 102 and the secondary network device 103 are not limited.

In an example, the dual connection mode is an EN-DC mode or a next generation EN-DC (NGEN-DC) mode. In this case, the primary network device is an LTE network device, and the secondary network device is an NR network device, the terminal communicates with both the LTE network device and the NR network device.

In another example, the dual connection mode is an NR-evolved UMTS (NR-EUTRA, NE-DC) mode. In this case, the primary network device is an NR network device, the secondary network device is an LTE network device, and the terminal communicates with both the LTE network device and the NR network device.

It should be noted that the dual connection mode is not limited to the aforementioned EN-DC mode and NE-DC mode, and the specific type of the dual connection mode is not limited in the embodiment of the present disclosure.

In the specific implementation, the deployment method of the primary network device and the secondary network device can be co-site deployment (e.g., the NR network device and the LTE network device can be set on one physical device), or non-co-site deployment (e.g., the NR network device and the LTE network device can be set on different physical devices), which is not limited to the present disclosure. Herein, the LTE network device may also be referred to as an evolved network device (evolved Node B, eNB), and the NR network device may also be referred to as a next generation node B (gNB). It should be noted that the relationship between coverage ranges of the primary network device and the secondary network device may not be limited to the present disclosure. For example, the primary network device and the secondary network device may have coverage ranges in an overlapping manner.

The specific type of the terminal device 101 is not limited to the present disclosure. It can be any user device that supports the aforementioned dual connection mode, such as a smartphone, a personal computer, a notebook computer, a tablet computer, and a portable wearable device.

Hereinafter, the technical solution of the present disclosure and how the technical solution of the present disclosure solves the above-mentioned technical problems will be described in detail by using the embodiments in conjunction with the drawings. The following specific embodiments can be combined with each other, and the same or similar concepts or processes may not be repeated in some embodiments.

Until here, the electronic device involved in the embodiment of the present disclosure has been described according to its functions. Based on the software/hardware structure of the electronic device shown in FIG. 1 and the network architecture shown in FIG. 2, continue to describe the network connection scheme provided by the embodiments of the present disclosure.

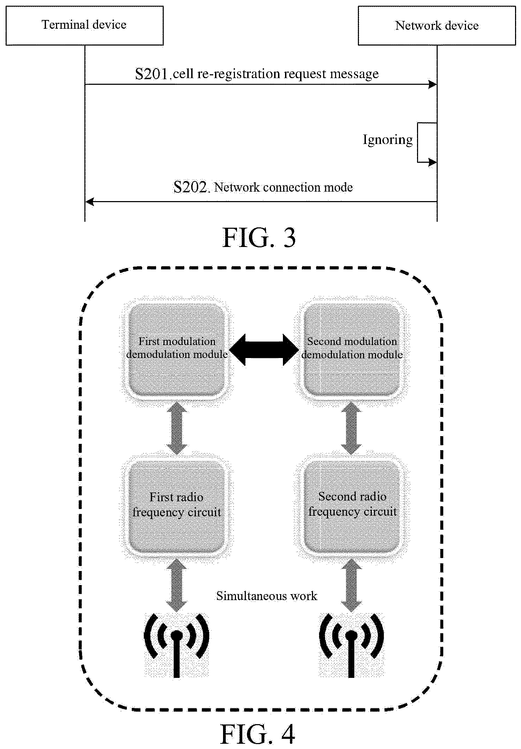

FIG. 3 shows a flowchart of a network connection method applied to a terminal device according to an embodiment of the present disclosure, which will be described according to each step.

Step S201: sending, by a terminal device, a cell re-registration request message to a network device in a case that a request for updating a tracking area from the terminal device to the network device fails.

In the embodiment of the present disclosure, the terminal device supports a dual connection mode. In the dual connection mode, the terminal device communicates with both a first network device and a second network device. In an embodiment, the first network device is a secondary network device, and the second network device is a primary network device. The secondary network device is responsible for transmitting data. The primary network device is mainly responsible for transmitting signalling. The device forms a dual-connection architecture with the first network device and the second network device, refer to FIG. 2.

In the embodiment of the present disclosure, the dual connection mode is, for example, an EN-DC mode, or an NGEN-DC mode, or an NE-DC mode. Taking the EN-DC mode as an example, the second network device is an NR network device (i.e. gNB), the first network device is an LTE network device (i.e. eNB), and the terminal device simultaneously communicates with both the NR network device and the LTE network device. Compared with the terminal device in the single connection mode that needs to communicate with one network device (such as an LTE network device or an NR network device), the terminal device in the dual connection mode consumes more power. For this reason, in the embodiment of the present disclosure, the transmission rate of the terminal is limited to save the power consumption of the terminal in the dual connection mode.

FIG. 4 is a structural diagram of a communication module of a terminal device in a dual connection mode. As shown in FIG. 4, in order for the terminal device to communicate with two network devices at the same time, the terminal device needs to have two sets of communication modules, which correspond to two network devices, respectively. A first modem module and a first radio frequency path (including a first radio frequency circuit and a first radio frequency antenna) form a first set of communication modules, and the first set of communication modules corresponds to the first network device. A second modem module and a second radio frequency path (including a second radio frequency circuit and a second radio frequency antenna) form a second set of communication modules, and the second set of communication modules corresponds to the second network device. In an example, the second modem is a 5G modem, the first modem is a 4G modem, the second radio frequency circuit is related to 5G RF, and the first radio frequency circuit is related to 4G RF. In the dual connection mode, the first communication module and the second communication module work at the same time.

In an example, the terminal device first establishes a connection with the first network device and then establishes a connection with the second network device. For example, in a case that a terminal device is connected to a first network device, a control instruction sent by a second network device is received, and the control instruction is used to trigger the activation of the communication function corresponding to the second network device; the terminal device establishes a connection with the second network device in response to the control instruction.

Before performing step S201, if the terminal device in the dual connection mode determines to disable the dual connection mode and adopts a single connection mode, the terminal device returns to an idle state and initiates a tracking area update (TAU) process. Optionally, the terminal device may also release radio resource control (RRC) by itself in a specific scenario and fall back to the idle state. During the tracking area update process that is initiated by the terminal device, the terminal device sends a TAU request message to the network device. In the TAU request message, a value of UE radio capability information update needed is set to 1, and a value of an active flag in "EPS update type" is set to 0. In this way, the network device can configure the terminal device to the idle state after the TAU process ends.

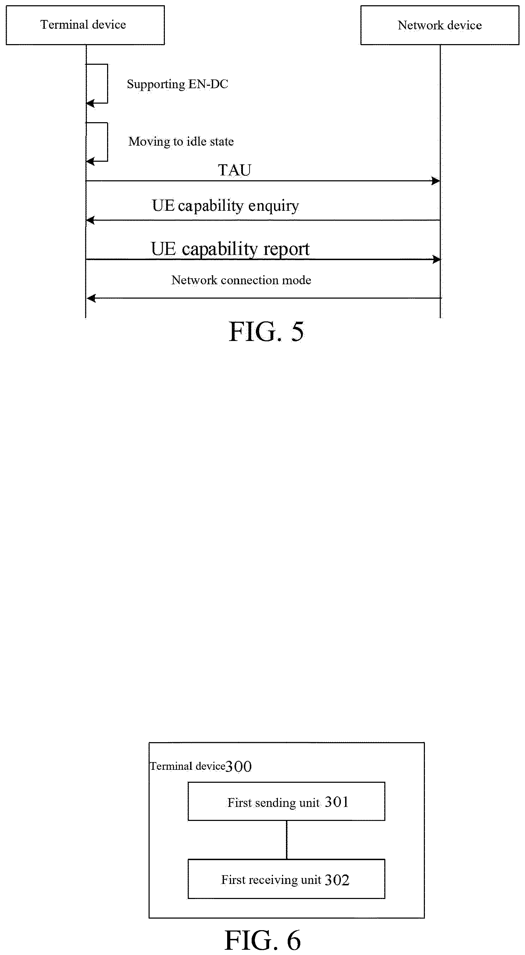

In some embodiments, in a schematic diagram of the tracking area update process, as shown in FIG. 5, the terminal device in EN-DC mode determines to disable the EN-DC mode and adopts the single connection mode, then the terminal device returns to the idle state and initiates the TAU process to the network device. After the TAU request message is received by the network device, the network device knows that the terminal device needs to update a capability of the terminal device, and then initiates a UE capability enquiry process to the terminal device. Then, the terminal device reports a UE capability report to the network device and indicates whether the terminal device has the capability to connect to the second network. When the terminal device does not have the capability to connect to the second network is instructed, the network device does not configure the dual connection mode to the terminal device.

In other embodiments, after the network device receives the TAU request message, the network device ignores the TAU request message, that is, the network device does not initiate the UE capability enquiry process to the terminal device; if the terminal device does not receive a terminal device capability enquiry request message sent by the network device within a predetermined duration, it is considered that the TAU has failed. At this time, the terminal device sends a re-registration request message to the network device. The terminal device provides the re-registration request message including that: the terminal device supports connecting to the second network, or the terminal device does not support connecting to the second network.

Step S202: receiving, by the terminal device, a network connection mode configured by the network device.

In some embodiments, in a case that the cell re-registration request message includes that the terminal device does not support connecting to the second network, the terminal device receives the single connection mode configured by the network device; in the single connection mode, the terminal device can only access the first network. In a scenario wherein a terminal device is switched from a dual connection mode to a single connection mode, the network device is the primary network device. The primary network device sends a message to the secondary network device in the dual connection mode to instruct the secondary network device to disconnect from the terminal device. Namely, it is instructed that data transmission is no longer performed between the secondary network device and the terminal device. In a scenario wherein a terminal device is switched from a dual connection mode to a single connection mode, the network device is the primary network device, before the terminal device receives the single connection configuration sent by the network device, the terminal device disconnects the terminal device from the secondary network device, the secondary network device sends a message to the primary network device, and the message is used to notify the primary network device and the terminal device to perform data transmission and signalling transmission. In this scenario, the terminal device may also continue to send first information to the network device, wherein the first information is used to indicate that the terminal device supports connecting to the second network. After the network device receives the first information sent by the terminal device, the network device configures the dual connection mode for the terminal device. In a case that a network device is configured with a dual connection mode for a terminal device, the network device can be considered as the primary network device; the primary network device also needs to send a message to the secondary network device to instruct the secondary network device to establish a connection with the terminal device and indicate to perform data transmission between the secondary network device and the terminal device. In this scenario, the primary network device and the terminal device perform signalling transmission.

In the specific implementation, the terminal device can restart to perform a measurement report for the second network, and the measurement report for the second network is reported to the network device by the terminal device, so that the network device knows that the terminal device has the capability to support the second network; then the network device configures the dual connection mode for the terminal device. In the dual connection mode, the terminal device can simultaneously access the first network and the second network.

In other embodiments, when the cell re-registration request message includes that the terminal device supports connecting to the second network, the terminal device receives the dual connection mode configured by the network device.

It should be noted that, in an optional embodiment of the present disclosure, the first network is an LTE network, and the second network is an NR network. A connection established between the terminal device and the network device through the first network refers to that the terminal device and the network device communicate within the first network. The dual connection mode can be an EN-DC mode.

In the embodiment of the present disclosure, after a connection is established between the terminal device and the second network device corresponding to the second network, the terminal device can communicate with the second network device. It should be noted that the connection described in the embodiments of the present disclosure refers to access. After the terminal device enables a communication function of the second network device, it needs to adjust various parameters of the terminal device according to the actual situation, so as to achieve the best compromise between performance and power consumption, so that the user can obtain a better experience.

An application scenario of the network connection method provided by an embodiment of the present disclosure is that: the terminal device detects its own remaining power, and when the remaining power is lower than a predetermined threshold, the terminal device enables to restrict the communication function corresponding to the second network device. In a case that the communication function corresponding to the second network device starts to be restricted, the terminal device reports to the network device that the terminal device does not have the capability to support the second network (5G network) through a re-registration request message, thereby avoiding the network device from configuring the dual connection mode for the terminal device to save the power consumption of the terminal device. In the specific implementation, the threshold, such as 20%, can be flexibly set according to the needs of the user.

Another application scenario of the network connection method provided by an embodiment of the present disclosure is that: in a case that the second network is abnormally established or disconnected frequently, the terminal device enables to restrict the communication function corresponding to the second network device. In a case that the communication function corresponding to the second network device starts to be restricted, the terminal device reports to the network device that the terminal device does not have the capability to support the second network (5G network) through a re-registration request message, thereby avoiding the network device from configuring the dual connection mode for the terminal device to save the power consumption of the terminal device. In the specific implementation, the second network established or disconnected abnormally frequently may be three times of establishing or disconnecting the second network within 1 minute.

Another application scenario of the network connection method provided in an embodiment of the present disclosure is that: in a case that the terminal device is in deep sleep, the terminal device enables to restrict the communication function corresponding to the second network device. In a case that the communication function corresponding to the second network device starts to be restricted, the terminal device reports to the network device that the terminal device does not have the capability to support the second network (5G network) through a re-registration request message, thereby avoiding the network device from configuring the dual connection mode for the terminal device to save the power consumption of the terminal device. In the specific implementation, the terminal device in deep sleep can be that: a power consumption optimization software module inside the terminal device sends a deep sleep state event registration request message to an application layer power management system inside the terminal device, and the application layer power management system sends a deep sleep event occurrence indication based on the deep sleep state event registration request message to the power consumption optimization software module, wherein the deep sleep event occurrence indication is used to instruct the terminal device to enter a deep sleep state.

In the above technical solution of the embodiment of the present disclosure, the terminal device reports to the network device that the terminal device does not have the capability to support the second network (5G network) through the re-registration request message, thereby avoiding the network device from configuring the dual connection mode for the terminal device to save the power consumption of the terminal device and increase the service life of the terminal device.

Based on the network connection method provided in the foregoing embodiment, an embodiment of the present disclosure also provides a terminal device. The terminal device 300, as shown in a schematic diagram of a composition structure in FIG. 6, includes:

A first sending unit 301 that is configured to send a cell re-registration request message to a network device in a case that a request for updating a tracking area from a terminal device to a network device fails; the terminal device supports a dual connection mode and establishes a connection with the network device through a first network, and the cell re-registration request message is used to cause the network device to know the capability of the terminal device to connect to the second network;

A first receiving unit 302 that is configured to receive a network connection mode configured by the network device.

In an embodiment, the first sending unit 301 is configured to send a tracking area update request message to the network device in a case that the terminal device is in an idle state;
The first receiving unit 302 has not received a terminal device capability enquiry request message sent by the network device within a predetermined duration.

In an embodiment, the cell re-registration request message includes that: the terminal device supports connecting to the second network, or the terminal device does not support connecting to the second network.

In an embodiment, the first receiving unit 302 is configured to receive a single connection mode configured by the network device in a case that the cell re-registration request message includes that the terminal device does not support connecting to the second network; in the single connection mode, the terminal device can only access the first network.

In an embodiment, the first receiving unit 302 is configured to receive a dual connection mode configured by the network device in a case that the cell re-registration request message includes that the terminal device supports connecting to the second network; in the dual connection mode, the terminal device can simultaneously access the first network and the second network.

In an embodiment, the first sending unit 301 is further configured to send first information to the network device, wherein the first information is used to indicate that the terminal device supports connecting to the second network.

In an embodiment, the first network is an LTE network, and the second network is an NR network.

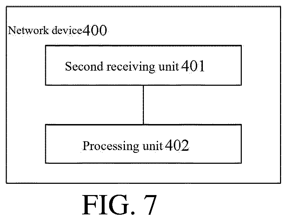

Based on the network connection method provided in the above embodiments, an embodiment of the present disclosure also provides a terminal device. The network device 400, as shown in a schematic diagram of a composition structure in FIG. 7, includes:
A second receiving unit 401 that is configured to receive a tracking area update request message sent by a terminal device, wherein the network device establishes a connection with the terminal device through a first network;
A processing unit 402 that is configured to ignore the tracking area update request message.

In an embodiment, the processing unit 402 is configured to not send a terminal device capability enquiry request message to the terminal device within a predetermined duration after the tracking area update request message is received by the second receiving unit.

In an embodiment, the second receiving unit 401 is further configured to receive a cell re-registration request message sent by the terminal device, wherein the cell re-registration request message is used to cause the network device to know the capability of the terminal device to connect to the second network.

In an embodiment, the processing unit 402 is further configured to configure a network connection mode for the terminal device based on the cell re-registration request message.

In an embodiment, the processing unit 402 is configured to configure a single connection mode for the terminal device in a case that the cell re-registration request message includes that the terminal device does not support connecting to the second network; in the single connection mode, the terminal device can only access the first network.

In an embodiment, the processing unit 402 is configured to configure a dual connection mode for the terminal device in a case that the cell re-registration request message includes that the terminal device supports connecting to the second network; in the dual connection mode, the terminal device can simultaneously access the first network and the second network.

In an embodiment, the second receiving unit 401 is further configured to receive first information sent by the terminal device, wherein the first information is used to indicate that the terminal device supports connecting to the second network.
In the embodiment of the present disclosure, the first network is an LTE network, and the second network is an NR network.

## Claims

1. A network connection method, wherein a terminal device (101, 300) supports a dual connection mode and establishes a connection with a network device (102, 103, 400) through a first network, **characterized in that** the method comprises:
sending (S201), by the terminal device (101, 300), a cell re-registration request message to the network device (102, 103, 400) in a case that a request for updating a tracking area from the terminal device (101) to the network device (102, 103, 400) fails; wherein the cell re-registration request message is configured to cause the network device (102, 103, 400) to know a capability of the terminal device (101, 300) to connect to a second network; and
receiving (S202), by the terminal device (101, 300), a network connection mode configured by the network device (102, 103, 400).

2. The method as claimed in claim 1, **characterized in that** the case that the request for updating the tracking area from the terminal device (101, 300) to the network device (102, 103, 400) fails, comprises:
sending, by the terminal device (101, 300), a tracking area update request message to the network device (102, 103, 400), in an idle state;
wherein the terminal device (101, 300) does not receive a terminal device capability enquiry request message sent by the network device (102, 103, 400), within a predetermined duration.

3. The method as claimed in claim 1 or 2, **characterized in that** the cell re-registration request message comprises:
an indication that the terminal device (101, 300) supports connecting to the second network, or the terminal device (101, 300) does not support connecting to the second network.

4. The method as claimed in claim 3, **characterized in that**, in a case that the cell re-registration request message comprises the indication that the terminal device (101, 300) does not support connecting to the second network, the receiving, by the terminal device (101, 300), the network connection mode configured by the network device (102, 103, 400), comprising:
receiving, by the terminal device (101, 300), a single connection mode configured by the network device (102, 103, 400); wherein the terminal device (101, 300) is only capable of accessing the first network, in the single connection mode.

5. The method as claimed in claim 3, **characterized in that**, in a case that the cell re-registration request message comprises the indication that the terminal device (101, 300) supports connecting to the second network, the receiving, by the terminal device (101, 300), the network connection mode configured by the network device (102, 103, 400), comprising:
receiving, by the terminal device (101, 300), the dual connection mode configured by the network device (102, 103, 400); wherein the terminal device (101, 300) is capable of accessing the first network and the second network simultaneously, in the dual connection mode.

6. The method as claimed in claim 5, **characterized in that** the method further comprises:
sending, by the terminal device (101, 300), first information to the network device (102, 103, 400), wherein the first information is configured to indicate that the terminal device (101, 300) supports connecting to the second network.

7. The method as claimed in any one of claims 1 to 6, **characterized in that**:
the first network is a long-term evolution (LTE) network, and the second network is a new radio (NR) network.

## Patentansprüche

1. Netzwerkverbindungsverfahren, wobei eine Endgerätevorrichtung (101, 300) einen Doppelverbindungsmodus unterstützt und eine Verbindung mit einer Netzwerkvorrichtung (102, 103, 400) über ein erstes Netzwerk aufbaut, **dadurch gekennzeichnet, dass** das Verfahren umfasst:
Senden (S201) einer Anforderungsnachricht zur Zellenneuregistrierung durch die Endgerätevorrichtung (101, 300) an die Netzwerkvorrichtung (102, 103, 400) in einem Fall, in dem eine Anforderung zum Aktualisieren eines Verfolgungsbereichs von der Endgerätevorrichtung (101) an die Netzwerkvorrichtung (102, 103, 400) fehlschlägt; wobei die Anforderungsnachricht zur Zellenneuregistrierung dazu ausgelegt ist, die Netzwerkvorrichtung (102, 103, 400) dazu zu veranlassen, eine Fähigkeit der Endgerätevorrichtung (101, 300) zur Verbindung mit einem zweiten Netzwerk zu kennen; und
Empfangen (S202) eines durch die Netzwerkvorrichtung (102, 103, 400) konfigurierten Netzwerkverbindungsmodus durch die Endgerätevorrichtung (101, 300).

2. Verfahren nach Anspruch 1, **dadurch gekennzeichnet, dass** der Fall, dass die Anforderung zum Aktualisieren des Verfolgungsbereichs von der Endgerätevorrichtung (101, 300) an die Netzwerkvorrichtung (102, 103, 400) fehlschlägt, umfasst:
Senden einer Anforderungsnachricht zur Aktualisierung des Verfolgungsbereichs durch die Endgerätevorrichtung (101, 300) an die Netzwerkvorrichtung (102, 103, 400) in einem Ruhezustand;
wobei die Endgerätevorrichtung (101, 300) eine durch die Netzwerkvorrichtung (102, 103, 400) gesendete Anforderungsnachricht zur Abfrage der Fähigkeiten der Endgerätevorrichtung nicht innerhalb einer vorbestimmten Dauer empfängt.

3. Verfahren nach Anspruch 1 oder 2, **dadurch gekennzeichnet, dass** die Anforderungsnachricht zur Zellenneuregistrierung umfasst:
eine Angabe, dass die Endgerätevorrichtung (101, 300) die Verbindung mit dem zweiten Netzwerk unterstützt, oder dass die Endgerätevorrichtung (101, 300) die Verbindung mit dem zweiten Netzwerk nicht unterstützt.

4. Verfahren nach Anspruch 3, **dadurch gekennzeichnet, dass** in einem Fall, in dem die Anforderungsnachricht zur Zellenneuregistrierung die Angabe umfasst, dass die Endgerätevorrichtung (101, 300) die Verbindung mit dem zweiten Netzwerk nicht unterstützt, das Empfangen des durch die Netzwerkvorrichtung (102, 103, 400) konfigurierten Netzwerkverbindungsmodus durch die Endgerätevorrichtung (101, 300) umfasst:
Empfangen eines durch die Netzwerkvorrichtung (102, 103, 400) konfigurierten Einzelverbindungsmodus durch die Endgerätevorrichtung (101, 300); wobei die Endgerätevorrichtung (101, 300) nur im Einzelverbindungsmodus in der Lage ist, auf das erste Netzwerk zuzugreifen.

5. Verfahren nach Anspruch 3, **dadurch gekennzeichnet, dass** in einem Fall, in dem die Anforderungsnachricht zur Zellenneuregistrierung die Angabe umfasst, dass die Endgerätevorrichtung (101, 300) die Verbindung mit dem zweiten Netzwerk unterstützt, das Empfangen des durch die Netzwerkvorrichtung (102, 103, 400) konfigurierten Netzwerkverbindungsmodus durch die Endgerätevorrichtung (101, 300) umfasst:
Empfangen des durch die Netzwerkvorrichtung (102, 103, 400) konfigurierten Doppelverbindungsmodus durch die Endgerätevorrichtung (101, 300); wobei die Endgerätevorrichtung (101, 300) in der Lage ist, im Doppelverbindungsmodus gleichzeitig auf das erste Netzwerk und das zweite Netzwerk zuzugreifen.

6. Verfahren nach Anspruch 5, **dadurch gekennzeichnet, dass** das Verfahren ferner umfasst:
Senden einer ersten Information durch die Endgerätevorrichtung (101, 300) an die Netzwerkvorrichtung (102, 103, 400), wobei die erste Information dazu ausgelegt ist, anzugeben, dass die Endgerätevorrichtung (101, 300) die Verbindung mit dem zweiten Netzwerk unterstützt.

7. Verfahren nach einem der Ansprüche 1 bis 6, **dadurch gekennzeichnet, dass**:
das erste Netzwerk ein Langzeitentwicklungs-, LTE-, Netzwerk und das zweite Netzwerk ein neues Funk-, NR-, Netzwerk ist.

## Revendications

1. Procédé de connexion à un réseau, dans lequel un dispositif terminal (101, 300) prend en charge un mode de connexion double et établit une connexion avec un dispositif de réseau (102, 103, 400) à travers un premier réseau, le procédé étant **caractérisé en ce qu'**il comprend les étapes consistant à :
envoyer (S201), par le dispositif terminal (101, 300), un message de demande de réinscription de cellule au dispositif de réseau (102, 103, 400) en cas d'échec d'une demande de mise à jour d'une zone de poursuite issue du dispositif terminal (101) et adressée au dispositif de réseau (102, 103, 400) ; dans lequel le message de demande de réinscription de cellule est configuré pour amener le dispositif de réseau (102, 103, 400) à connaître une capacité du dispositif terminal (101, 300) à se connecter à un deuxième réseau ; et
recevoir (S202), par le dispositif terminal (101, 300), un mode de connexion de réseau configuré par le dispositif de réseau (102, 103, 400).

2. Procédé selon la revendication 1, **caractérisé en ce qu'**il comprend, en cas d'échec de la demande de mise à jour de la zone de poursuite issue du dispositif terminal (101, 300) et adressée au dispositif de réseau (102, 103, 400), l'étape consistant à :
envoyer, par le dispositif terminal (101, 300), un message de demande de mise à jour de zone de poursuite au dispositif de réseau (102, 103, 400), dans un état inactif ;
dans lequel le dispositif terminal (101, 300) ne reçoit pas de message de demande de recherche de capacité de dispositif terminal envoyé par le dispositif de réseau (102, 103, 400), au cours d'une durée prédéterminée.

3. Procédé selon la revendication 1 ou 2, **caractérisé en ce que** le message de demande de réinscription de cellule comprend :
une indication du fait que le dispositif terminal (101, 300) prend en charge la connexion au deuxième réseau, ou que le dispositif terminal (101, 300) ne prend pas en charge la connexion au deuxième réseau.

4. Procédé selon la revendication 3, **caractérisé en ce que**, dans le cas où le message de demande de réinscription de cellule comprend l'indication du fait que le dispositif terminal (101, 300) ne prend pas en charge la connexion au deuxième réseau, la réception, par le dispositif terminal (101, 300), du mode de connexion de réseau configuré par le dispositif de réseau (102, 103, 400) consiste à :
recevoir, par le dispositif terminal (101, 300), un mode de connexion unique configuré par le dispositif de réseau (102, 103, 400) ; dans lequel le dispositif terminal (101, 300) est seulement capable d'accéder au premier réseau, dans le mode de connexion unique.

5. Procédé selon la revendication 3, **caractérisé en ce que**, dans le cas où le message de demande de réinscription de cellule comprend l'indication du fait que le dispositif terminal (101, 300) prend en charge la connexion au deuxième réseau, la réception, par le dispositif terminal (101, 300), du mode de connexion de réseau configuré par le dispositif de réseau (102, 103, 400) consiste à :
recevoir, par le dispositif terminal (101, 300), le mode de connexion double configuré par le dispositif de réseau (102, 103, 400) ; dans lequel le dispositif terminal (101, 300) est capable d'accéder au premier réseau et au deuxième réseau simultanément, dans le mode de connexion double.

6. Procédé selon la revendication 5, le procédé étant **caractérisé en ce qu'**il comprend également l'étape consistant à :
envoyer, par le dispositif terminal (101, 300), des premières informations au dispositif de réseau (102, 103, 400), les premières informations étant configurées pour indiquer que le dispositif terminal (101, 300) prend en charge la connexion au deuxième réseau.

7. Procédé selon l'une quelconque des revendications 1 à 6, **caractérisé en ce que** :
le premier réseau est un réseau d'évolution à long terme (LTE), et le deuxième réseau est un réseau de nouvelle radio (NR).
